(19) Europäisches Patentamt / European Patent Office / Office européen des brevets

(11) **EP 3 015 265 B1**

(12) **EUROPEAN PATENT SPECIFICATION**

(45) Date of publication and mention
of the grant of the patent:
**27.12.2017 Bulletin 2017/52**

(51) Int Cl.:
**B32B 37/15** *(2006.01)*     **B32B 27/12** *(2006.01)*
**B32B 38/04** *(2006.01)*

(21) Application number: **15162188.5**

(22) Date of filing: **01.04.2015**

(54) **HIGH PERFORMANCE MOLDABLE COMPOSITE**

FORMBARER HOCHLEISTUNGSVERBUNDSTOFF

MATÉRIAU COMPOSITE MOULABLE HAUTE PERFORMANCE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.10.2014 US 201462072305 P
25.02.2015 US 201514631442**

(43) Date of publication of application:
**04.05.2016 Bulletin 2016/18**

(73) Proprietor: **Nonwoven Network LLC
Naples, FL 34102 (US)**

(72) Inventors:
• **Foss, Stephen W.
Naples, FL 34102-7606 (US)**
• **Turra, Jean-Marie
Greer, SC 29650 (US)**

(74) Representative: **Chas. Hude A/S
H.C. Andersens Boulevard 33
1780 Copenhagen V (DK)**

(56) References cited:
**EP-A2- 1 013 414      WO-A1-01/51546
DE-A1- 19 808 425      US-A1- 2011 114 414**

**Description**

BACKGROUND OF THE INVENTION

As automobiles have become lighter for better fuel efficiency, there has developed a need for better acoustics to prevent exterior road noise from penetrating into passenger compartments of vehicles. This is an increasingly difficult problem especially with Sports Utility Vehicles (SUVs) that have drivers wanting the durability of 4-wheel trucks with the luxury of a sedan. The large, nubby tires of the SUVs create significant road noise from the tires on the road as well as tire contact with sand, water, and also wind noise in general.

There are many all fiber versions of nonwovens that have a single layer of fibers blended to give some acoustic qualities and thermo-formable material that use blends of high and low melt fibers. However, these compositions have many drawbacks. For example, such substances tend to be very heavy in overall weight lending themselves to poor gas efficiency as well as overall vehicle stability. In addition, the acoustic noise reduction given by such substances fails to provide the acoustic requirements needed for a luxury sedan. Further, materials that are impervious films do not give good acoustic performance.

Acoustic impedance is an important physical property in substances that determine the substances ability to absorb sound. Specific Acoustic Impedance is the ratio between the sound pressure and the particle velocity produced by a sound wave moving through the substance. When sound waves pass through any physical substance, pressure of the sound waves causes the particles of the substance to move. Specific Acoustic Impedance is also directly related to the resistance of airflow. Specific Acoustic Impedance is measured in RAYLS. The higher number of RAYLS, the lower the velocity of sound transmission through a medium. A fabric is considered to have better acoustic sound absorption with a higher RAYLS number.

Specific acoustic impedance is known as being defined in the following formula:

$$\underline{Z}(\mathrm{r},\omega) = \frac{\underline{p}(\mathrm{r},\omega)}{\underline{v}(\mathrm{r},\omega)}$$

Where $\underline{Z}$ is the specific acoustic impedance, $\underline{p}$ is pressure, $\underline{v}$ is particle velocity, **r** is the position, and $\omega$ is the frequency. The RAYL number is also used for Characteristic Acoustic Impedance of a substance that is inherent physical property in substances.

Characteristic acoustic impedance is known as being defined in the following formula: $Z_0 = \rho_0 c_0$

Here $Z_0$ is the characteristic impedance, and $\rho_0$ is the density and $c_0$ is the speed of sound in the unperturbed substance when no sound waves are travelling through it. In both the Specific Acoustic Impedance and Characteristic Acoustic Impedance, the higher the RAYLS value, the better acoustic sound absorption.

EP-A-1 013414 relates to a reinforcing mat and a mat having a fiber layer encapsulated between polymer layers with an adhesive outer layer

Single layer nonwovens have tried to increase RAYLS by using more fine fibers to create a denser medium to reduce air flow, and hence reduce sound transmission. However this technique has not been achieved at a practical cost or weight.

At the same time, the Automobile Manufacturers have found a need for an Underbody Shield to be moldable, durable and fit under the vehicle to prevent road and wind noise from penetrating upward into the passenger compartment. Further, it has been shown that these composites are weighing close to 2,000 gsm (grams per square meter) to achieve the noise reduction levels desired. This amount of weight is too much for an automobile part due to stability of the vehicle, drag and energy efficiency concerns.

In addition, due to the high heat exposure from engine parts, a need exists for a product that does not exhibit failure during heat aging up to 150°C; has resistance to water, oil, and engine fluids, has low flame spread and low smoke, and is recyclable back into itself. Further, these moldable products must have excellent abrasion resistance against sand & gravel.

Thus there still exists a need for an acoustic absorber that is thermo-formable, light weight, resistant to water penetration, flame retardant, and has a high RAYLS number.

SUMMARY OF THE INVENTION

A method of making a thermo-formable composite comprising:

> extruding a polymeric film having at least one region defining holes to create a microporous open cell structure for acoustic impedance;
> forming said microporous open cells with either a blowing agent blended with the polymeric film or blowing in an inert gas into the polymeric film during an extrusion process;
> attaching the polymeric film to at least one moldable nonwoven fabric layer; said moldable nonwoven fabric containing a binder fiber selected from the group consisting of polyethylene terephthalate glycol (PETG), polylactic acid (PLA), isophthallic modified PET, polyethylene, and any combination thereof.

The invention utilizes a manufacturable composite consisting of at least two layers of moldable nonwoven fabrics. An extruded layer of blown film is used to make the material lighter and provide the necessary acoustic qualities of the material.

The composite material is made from a film such as, but not limited to low density polyethylene, linear low density polyethylene, high density polyethylene, polypropylene, polyvinyl chloride, polyethylene terephalate, polyethylene terephalate glycol-modified, polyamide, nylon and the like. A polyethylene glycol-modified (PETG) may be used as a binder fiber. Polylactic acid (PLA) may also be used in the composite material. Other binder fibers may be used including Isophthallic modified PET, polyethylene, and polypropylene. A blowing agent such as an inert gas of air, nitrogen, carbon dioxide, helium, argon, oxygen or the like may be used to generate cells within the film. The cells created provide lighter weight and increased acoustic capability for the composite material.

During blending fiber finishes such as Goulston L624 (fluorocarbon) may be applied during blending. Other finishes such as Lurol 14951 may be blended with L624 to achieve heat and/or fire retardant characteristics. Anti-stats such as ASY may be added to improve run ability especially with low humidity conditions.

The nonwoven material may include polyethylene terephthalate glycol-modified (PETG) as a binder. When the PETG is melted it flows uniformly and formed meniscus at the bond points of the high melt fibers. The level of the PETG percentage controls the stiffness and the air flow resistance.

Further the nonwoven may use in addition to or as a replacement binder Polylactic Acid (PLA) such as fibers made from Cargill's PLA Ingeo polymer with a melting point of 140°C. The PLA may or may not be blended with the above PETG fibers.

BRIEF DESCRIPTION OF THE DRAWINGS

Figure 1 is a flow diagram showing one embodiment of manufacturing a composition in accordance with the present disclosure.

Figure 2 is a cross-sectional view of one embodiment of a composition in accordance with the present disclosure.

Figure 3 is a cross-sectional view of one embodiment of a composition in accordance with the present disclosure.

Figure 4 is a flow diagram illustrating applying finishing material on the composite for heat exposure in automotive applications.

DETAILED DESCRIPTION

Nonwoven Network, LLC pioneered a Tri-layer product known as Raptor™ that contains a 500 gsm (grams per square meter) polyester absorber layer, an 150 gsm PP film layer acting as a barrier layer, and a 375 gsm polyester absorber layer. This product provides superior sound attenuation qualities and also has an impervious layer that prevents water from penetrating to the metal frame of the vehicle.

Further, Nonwoven Network LLC has developed a new concept in acoustic noise reduction from the wheel wells, especially in Sport Utility Vehicles. Raptor™ is a tri-laminate composite that incorporates an absorber layer-barrier layer-absorber layer to dramatically reduce the noise in the cabin with vehicles with large tires and aggressive treads. The product is in full production in a recently launched vehicle and has received outstanding reviews for sound and durability.

The Tri-Layer Raptor™ product has the best acoustics for a 1,015 gsm product, however there is a need to improve its performance while keeping the weight at the same level.

The invention utilizes a low melt fiber made from a co-polyester where cyclohexane dimethanol (CHDM) has been substituted for some of the ethylene glycol (EG) normally polymerized with Purified Terephthalic Acid to produce Polyester (PET). The result is a polymer called PETG. The melting point of the polymer can be adjusted from 110°C to 170°C by adjusting the ratio of CHDM to EG.

The PETG will be blended with Standard PET fiber that has been heat set to 190°C.

Fibers made from Polylactic Acid (PLA) such as fibers made from Cargill's PLA Ingeo polymer the have been drawn and fully crystallized with a melting point of 140°C and above are blended with Polyester (PET) fibers that have been heat set at 170°C or above.

The plastics industry has used Blowing Agents to expand the plastic films and injection molded parts by injecting inert gasses such as $N_2$ (Nitrogen) or $CO_2$ (Carbon Dioxide). The first known use was in 1846 when Hancock received a patent to make synthetic sponges with rubber. Other blowing agents such as Sodium Bi-Carbonate (Commonly known as Baking Powder) have been used in bakery products (cakes) and plastics. Ethylene Carbonate decomposes with heat to produce $CO_2$. Ammonium Nitrate decomposes with heat to produce $N_2$.

Examples of companies that make Blowing agents for plastic extrusion include Techmer, Clariant, Reedy, Kibbechem, Wells, and Beryl for example.

It is also possible to inject inert gasses directly into the extruder as shown by Linde Industrial gasses such as Nitrogen, Argon, Helium, and Carbon Dioxide and the like.

Further blending in a blowing agent at a rate of 0.1 to 3.0% will provide inert gasses to allow a producer to make the film lighter in weight at the same thickness. Alternatively, by maintaining the same film weight, the thickness increases. The additional thickness can increase the flexural modulus, thus producing a stiffer part.

By combining the blown film with 1 or 2 fabric layers, a thermo-formable composite can be made. The blown film is protected by the fabrics. Since the fabrics contain a high percentage of low melt formable fibers, a very stiff and durable composite can be formed.

The following are examples given to illustrate the benefits of the present invention. These examples are in no means meant to limit the invention to these particular embodiments.

EXAMPLE 1

In the first example, GA24, the following was used:

Layer 1: 200 gsm 70% Type P110 6d Black Polyester/ 30% Black 4 denier PETG.
Layer 2: 150 gsm Blown HDPE film with 1.0% Techmer Blowing agent.
Layer 3: 650 gsm 70% Type P110 6d Black Polyester/ 30% Black 4 denier PETG

Total weight 1,000 gsm

The Extrusion temperature was 210°C to achieve full blowing potential. The products were molded using a 210°C oven to preheat the composite assuring that the 165°C melt point of the PETG fiber was achieved.
The result was a very stiff molded part with excellent flexural modulus.
The molded composite was tested for RAYLS and found to be very high with little porosity, but with some porosity. It was then subjected to Acoustic testing with excellent results.
The molded composite withstood long term heat and environmental aging.

EXAMPLE 2

In the second example, GA25 the following was used:

Layer 1: 200 gsm 70% Type P110 6d Black Polyester/ 30% Black 4 denier PETG
Layer 2: 100 gsm Blown HDPE film with 1.0% Techmer Blowing agent
Layer 3: 700 gsm 70% Type P110 6d Black Polyester/ 30% Black 4 denier PETG

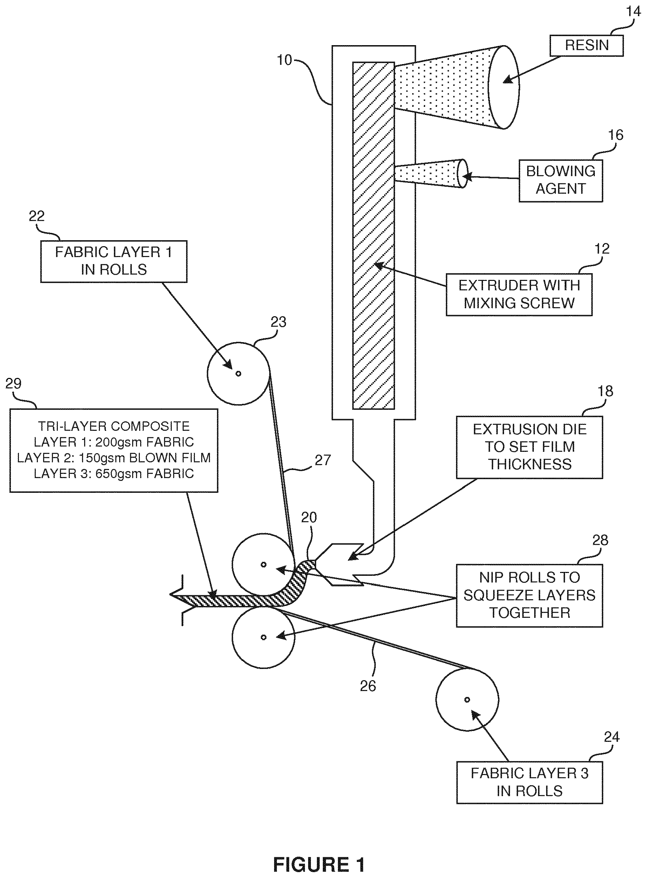

Total weight 1,000 gsm.
The Extrusion temperature was 210°C to achieve full blowing potential. The products were molded using a 210°C oven to preheat the composite assuring that the 165°C melt point of the PETG fiber was achieved.
The result was a very stiff molded part with excellent flexural modulus.
The molded composite was tested for RAYLS and found to be very high with little porosity, but better than GA24. It was then subjected to Acoustic testing with excellent results.
The molded composite withstood long term heat and environmental aging.
It was determined that the composites could be made with other blends of Polyester, Polypropylene, Nylon, Cotton, or other types of fibers. Other binder fibers could also be used.
The extruded film could be made from any thermoplastic resin such as LDPE, LLDPE, HDPE, Polypropylene, PVC, PET, Polyamide (Nylon), EVA and the like.
Adverting to the drawings, Figure 1 illustrates a flow diagram of one embodiment of extruding the bi and /or tri layer composite composition. As shown, extruder 10 may be a standard single screw or twin screw extruder depending on the embodiment. A resin 14 is place in the extruder's hopper with blowing agent 16. The resin 14 may be among other things any polyolefin such as but not limited to HDPE, LLDPE, LDPE, and the like. Resin 14 may also be any of the polymers mentioned in specification and claims. Blowing agent 16 may be a chemical blowing agent as previous described and/or a gas injected blowing agent depending on the embodiment.
The extruder 10 has a mixing screw 12 that melts the resin pellets and mixes the blowing agent to generate microscopic voids. The voids are preferably open cell holes for use in acoustic impedance as described herein. An extrusion die 18 sets the film thickness of the polymer. And creates a film 20 with the microscopic voids or holes.
Depending on the implementation of either a bi-layer or tri-layer composite material, a fabric (non-woven) layer 22 is released from roll 23 and may or may not be stretched or worked, depending on the embodiment, for nonwoven fabric 27 to be attached to film 20 by nip rolls 28.
In a tri-layer composite implementation, another fabric (non-woven) layer 24 is released from roll 25. Again the nonwoven layer may or may not be stretched or worked, depending on the embodiment, for nonwoven fabric 26 to be attached to film 20 by nip rolls 28. Nip rolls 28 may or may not be chilled or heated depending on the embodiment. Nip rolls 28 also use mechanical pressure to squeeze the layers together. Nonwoven fabric may be made of any compositions discussed in this specification. PETG, Polyethylene, isophthallic modified PET, and/or PLA may also be used as binders in the non-woven fabric. Examples of non-woven materials include for example, and are not limited to, cellulosic, keratin, wool, cotton, polyesters, fabric, polylactic acids, nylons, rayons, polypropylene, and any combination thereof. In either a bi-layer or tri-layer composite the grams per square meter (gsm) of each layer may be controlled by nips 28 and/ rollers 23, 25, and/or the line speed of the extrusion line and/or the amount of blowing agent 16. In a tri-layer composite embodiment 29, for example layer 1 of a nonwoven material may be 1-200 gsm, layer 2 of a blown film may be 1150 gsm, and layer 3 of a nonwoven fabric may be 650 gsm, for example.

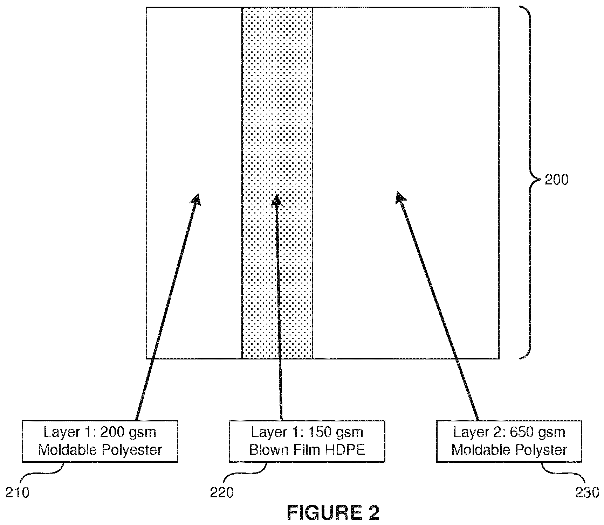

Figure 2 illustrates a moldable end product 200 of the extrusion process shown in Figure 1 using a tri-layer composite end product. In Figure 2, a layer of moldable polyester 210 having a 200gsm is used. The second layer 220 is the blown film layer and in this example made of high density polyethylene (HDPE) with a 150 gsm. The third layer is a nonwoven moldable polyester 230 having a 650 gsm. The microscopic holes or cells in the blown film 220 assist with the acoustic impedance quality of the moldable material 200. This composite 200 now may be molded in any shape for automotive or other uses to assist in sound quality and acoustic impedance.

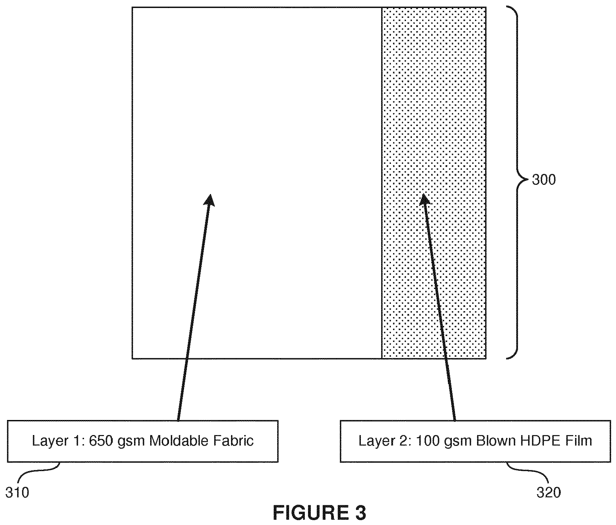

Figure 3 illustrates a moldable end product 300 of the extrusion process shown in Figure 1 using a bi-layer composite end product. In Figure 3, a layer of moldable fabric 310 having a 650gsm is used. The second layer 320 is the blown film layer and in this example made of high density polyethylene (HDPE) with a 100 gsm. No third layer is used in this embodiment. The microscopic holes or cells in the blown film 320 assist with the acoustic impedance quality of the moldable material 300. This composite 300 now may be molded in any shape for automotive or other uses to assist in sound quality and acoustic impedance.

Additional materials may also be applied to any fibrous element. For example, the PTEG or PLA fibers or any of the non-woven materials or blown film described above may be treated with a performance enhancing finish, either during fiber formation or fiber blending. The finish types may vary depending on the embodiments. In some embodiments, the finish is comprised of a fluorocarbon, such as the CF fluorocarbon sold by Goulston Technologies as FC-L624. This enhances among other things the durability and moisture resistance of the moldable fabric. In other embodiments, the finish is comprised of an inorganic phosphate salt, such as that sold by Goulston Technologies as L-14951. This enhances additive also enhances the heat resistance and flame retardant and/ or durability of the moldable fabric. In either instance, the performance enhancing finish preferably does not exceed 0.05% to 1.0% of the fiber weight. An alternate finish may also be comprised of a combination of a fluorocarbon and an inorganic phosphate salt to achieve fire retardant characteristics. Preferably, this alternate finish does not exceed 0.05% to 2.0% of the fiber weight. An anti-static element, such as ASY, may also be added to improve run ability, especially when the moldable fiber is manufactured within a low humidity environment.

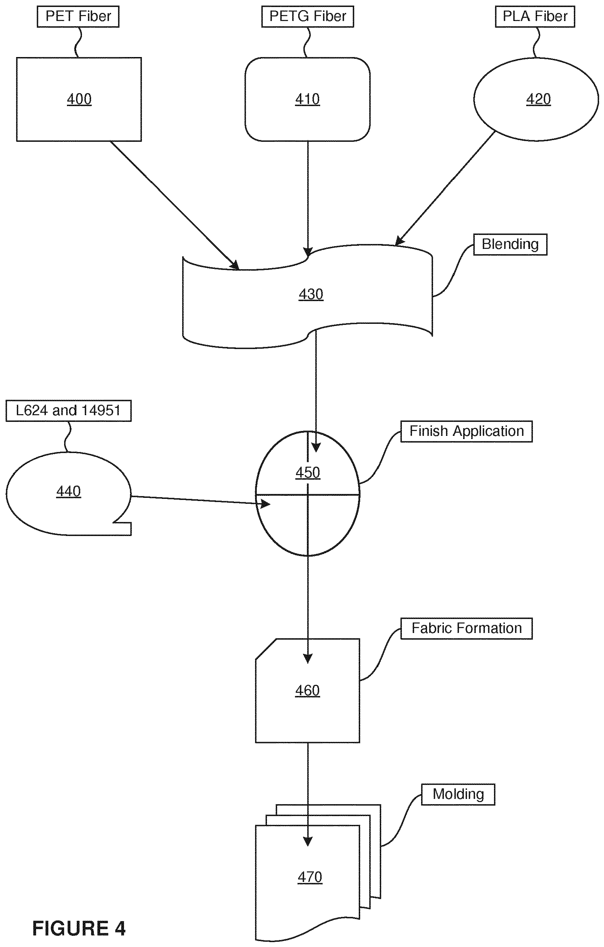

Figure 4 illustrates a flow diagram for a nonwoven fabric. Shown as an example, PET fiber 400, with PETG fiber 410 and PLA fiber 420 is blended in a blending machine 430. A finishing application 450 is accomplished adding additives for example those shown, but not limited to, additives in block 440. A fabric formation 46 is made that may be further molded as a product as shown in molding fabric 470 or utilized as a nonwoven fabric in the extrusion process explained in Figure 1.

## Claims

1. A method of making a thermo-formable composite comprising:

   extruding a polymeric film having at least one region defining holes to create a microporous open cell structure for acoustic impedance; forming said microporous open cells with either a blowing agent blended with the polymeric film or blowing in an inert gas into the polymeric film during an extrusion process; attaching the polymeric film to at least one moldable nonwoven fabric layer; said moldable nonwoven fabric containing a binder fiber selected from the group consisting of polyethylene terephthalate glycol (PETG), polylactic acid (PLA), isophthallic modified PET, polyethylene, and any combination thereof.

2. The method of making a thermo-formable composite of claim 1 further including using nip rollers to attach the polymeric film to the at least on nonwoven fabric.

3. The method of marking a thermo-formable composite of claim 2 further comprising:

   applying fiber finishes to achieve temperature resistant characteristics of the nonwoven fabric layer.

4. The method of claim 1 wherein the moldable nonwoven fabric contains a binder fiber made of a polyethylene terephthalate glycol (PETG) material.

5. The method of claim 1 wherein the moldable nonwoven fabric contains a polylactic acid (PLA) fiber.

6. The method of claim 1 wherein the holes in the extruded film are formed using an inert gas during an extrusion process of the extruded polymer film.

7. The method of claim 6 wherein the inert gas is selected from a group consisting of air, nitrogen, carbon dioxide, carbon monoxide, helium, argon, oxygen, and any combination thereof.

8. The method of claim 1 wherein the holes in the extruded polymer film are formed using a blowing agent blended with the extruded polymer film at a weight percentage of 0.2% to 3.0%.

9. The method of claim 1 wherein the nonwoven fabric layer is 50 grams per square meter (gsm) to 2000 grams per square meter (gsm).

10. The method of claim 1 wherein the polymer film is 50 grams per square meter (gsm) to 1000 grams per square meter (gsm).

11. The method of claim 1 wherein the fabric layer is 50 grams per square meter (gsm) to 1,200 grams per square meter (gsm).

**12.** The method of claim 1 wherein the composite exhibits porosity of air flow as measured in RAYLS.

**13.** The method of claim 11 wherein the porosity of air flow measures greater than 1.5 M-RAYLS.

## Patentansprüche

**1.** Ein Verfahren zur Herstellung eines thermoformbaren Verbunds, umfassend:

Extrudieren eines Polymerfilms mit mindestens einer Löcherdefinierenden Region, um eine mikroporöse offene Zellstruktur für die akustische Impedanz zu erzeugen;
Bilden jener mikroporösen offenen Zellen entweder durch ein mit dem Polymer vermischten Treibmittel oder durch Einblasen eines inerten Gases in den Polymerfilm während eines Extrusionsprozesses;
Verbinden des Polymerfilms mit mindestens einer Vliesstoffschicht;
wobei jene Vliesstoffschicht ein Bindemittel enthält, ausgewählt aus der Gruppe, bestehend aus Polyethylenterephatlatglykol (PETG), Polymilchsäure (PLA), Isophthal-modifiziertes PET, Polyethylen und jeder Kombination davon.

**2.** Das Verfahren zur Herstellung eines thermoformbaren Verbunds nach Anspruch 1, weiter umfassend Verwenden von Andruckwalzen, um den Polymerfilm mit der mindestens einen Vliesstoffschicht zu verbinden.

**3.** Das Verfahren eines thermoformbaren Verbunds nach Anspruch 2, weiter umfassend:

Anbringen von Faserenden, um temperaturbeständige Eigenschaften der Vliesstoffschicht zu erreichen.

**4.** Das Verfahren nach Anspruch 1, wobei die Vliesstoffschicht eine aus einem Polyethylenterephatlatglykol (PETG) -Material hergestellte Bindfaser enthält.

**5.** Das Verfahren nach Anspruch 1, wobei die Vliesstoffschicht eine Polymilchsäure (PLA)-Faser enthält.

**6.** Das Verfahren nach Anspruch 1, wobei die Löcher in dem extrudierten Polymerfilm unter Verwendung eines inerten Gases während eines Extrusionsprozesses des extrudierten Films gebildet werden.

**7.** Das Verfahren nach Anspruch 6, wobei das inerte Gas ausgewählt ist aus der Gruppe, bestehend aus Luft, Stickstoff, Kohlendioxid, Kohlenmonoxid, Helium, Argon, Sauerstoff und jeder Kombination davon.

**8.** Das Verfahren nach Anspruch 1, wobei die Löcher in dem extrudierten Polymerfilm unter Verwendung eines zu einem Gewichtsprozentsatz von 0,2% bis 3,0 % mit dem extrudierten Polymerfilm vermischten Treibmittels gebildet werden.

**9.** Das Verfahren nach Anspruch 1, wobei die Vliesstoffschicht 50 Gramm pro Quadratmeter (Gqm) bis 2000 Gramm pro Quadratmeter (Gqm) ist.

**10.** Das Verfahren nach Anspruch 1, wobei der Polymerfilm 50 Gramm pro Quadratmeter (Gqm) bis 1000 Gramm pro Quadratmeter (Gqm) ist.

**11.** Das Verfahren nach Anspruch 1, wobei die Stoffschicht 50 Gramm pro Quadratmeter (Gqm) bis 1200 Gramm pro Quadratmeter (Gqm) ist.

**12.** Das Verfahren nach Anspruch 1, wobei der Verbund eine Luftstromdurchlässigkeit, gemessen in RAYLS, aufweist.

**13.** Das Verfahren nach Anspruch 11, wobei die Luftstromdurchlässigkeit mehr als 1,5 M-RAYLS beträgt.

## Revendications

**1.** Procédé de fabrication d'un composite thermoformable comprenant :

l'extrusion d'un film polymère ayant au moins une région définissant des trous pour créer une structure à alvéoles ouvertes microporeuses en vue de l'impédance acoustique ;
la formation desdites alvéoles ouvertes microporeuses soit avec un agent d'expansion mélangé au film polymère soit par insufflation d'un gaz inerte dans le film polymère au cours d'un procédé d'extrusion ;
la fixation du film polymère à au moins une couche de tissu non tissé moulable ; ledit tissu non tissé moulable contenant une fibre liante choisie dans le groupe constitué du polyéthylène téréphtalate glycol (PETG), de l'acide polylactique (PLA), du PET modifié de manière isophtalique, du polyéthylène, et de toute combinaison de ceux-ci.

**2.** Procédé de fabrication d'un composite thermoformable selon la revendication 1 incluant en outre l'utilisation de rouleaux pinceurs pour fixer le film polymère à l'au moins un tissu non tissé.

**3.** Procédé de marquage d'un composite thermoformable selon la revendication 2 comprenant en outre :

l'application d'apprêts de fibres pour obtenir des caractéristiques de résistance à la température de la couche de tissu non tissé.

**4.** Procédé selon la revendication 1 dans lequel le tissu non tissé moulable contient une fibre liante faite d'un matériau en polyéthylène téréphtalate glycol (PETG).

**5.** Procédé selon la revendication 1 dans lequel le tissu non tissé moulable contient une fibre d'acide polylactique (PLA).

**6.** Procédé selon la revendication 1 dans lequel les trous présents dans le film extrudé sont formés à l'aide d'un gaz inerte au cours d'un procédé d'extrusion du film polymère extrudé.

**7.** Procédé selon la revendication 6 dans lequel le gaz inerte est choisi dans le groupe constitué de l'air, de l'azote, du dioxyde de carbone, du monoxyde de carbone, de l'hélium, de l'argon, de l'oxygène, et de toute combinaison de ceux-ci.

**8.** Procédé selon la revendication 1 dans lequel les trous présents dans le film polymère extrudé sont formés à l'aide d'un agent d'expansion mélangé au film polymère extrudé à un pourcentage pondéral de 0,2 % à 3,0 %.

**9.** Procédé selon la revendication 1 dans lequel la couche de tissu non tissé est de 50 grammes par mètre carré ($g/m^2$) à 2 000 grammes par mètre carré ($g/m^2$).

**10.** Procédé selon la revendication 1 dans lequel le film polymère est de 50 grammes par mètre carré ($g/m^2$) à 1 000 grammes par mètre carré ($g/m^2$).

**11.** Procédé selon la revendication 1 dans lequel la couche de tissu est de 50 grammes par mètre carré ($g/m^2$) à 1 200 grammes par mètre carré ($g/m^2$).

**12.** Procédé selon la revendication 1 dans lequel le composite présente une porosité à l'air telle que mesurée en RAYLS.

**13.** Procédé selon la revendication 11 dans lequel la porosité à l'air mesure plus de 1,5 M-RAYLS.

14 — RESIN

10

16 — BLOWING AGENT

22 — FABRIC LAYER 1 IN ROLLS

23

12 — EXTRUDER WITH MIXING SCREW

29 — TRI-LAYER COMPOSITE
LAYER 1: 200gsm FABRIC
LAYER 2: 150gsm BLOWN FILM
LAYER 3: 650gsm FABRIC

27

18 — EXTRUSION DIE TO SET FILM THICKNESS

20

28 — NIP ROLLS TO SQUEEZE LAYERS TOGETHER

26

24 — FABRIC LAYER 3 IN ROLLS

FIGURE 1

Layer 1: 200 gsm
Moldable Polyester

Layer 1: 150 gsm
Blown Film HDPE

Layer 2: 650 gsm
Moldable Polyster

210

220

230

200

**FIGURE 2**

| Layer 1: 650 gsm Moldable Fabric | Layer 2: 100 gsm Blown HDPE Film |

FIGURE 3

PET Fiber

400

PETG Fiber

410

PLA Fiber

420

Blending

430

L624 and 14951

440

Finish Application

450

Fabric Formation

460

Molding

470

**FIGURE 4**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1013414 A